# EUROPEAN PATENT SPECIFICATION

(11) **EP 2 169 805 B1**
(45) Date of publication and mention of the grant of the patent: **02.07.2014**
(21) Application number: 08165523.5
(22) Date of filing: 30.09.2008
(51) Int. Cl.: H02K 1/24, H02K 15/02

(54) **Rotor assembly for synchronous reluctance machines**
Rotoranordnung für Reluktanzmaschinen
Ensemble de rotor pour des machines à réluctance variable

(43) Date of publication of application: 31.03.2010
(73) Proprietor: ABB Research Ltd., 8050 Zürich (CH)
(72) Inventor: Magnussen, Freddy, SE-723 48 Västerås (SE); Johansson, Erik, SE-722 45 Västerås (SE); Kylander, Gunnar, SE-724 76 Västerås (SE)
(74) Representative: Kock, Ina

(56) References cited:
- EP-A- 1 111 755
- EP-A- 1 503 485
- WO-A-03/041889
- DE-A1- 2 727 490
- DE-A1- 10 040 978
- US-A- 4 114 019

## Description

The present invention relates to rotor assemblies of synchronous reluctance machines and manufacturing method for the rotor assemblies, in particular to rotor assemblies with attachment elements which provide improved bonding of rotor laminations.

### BACKGROUND OF THE INVENTION

Generally, synchronous reluctance machines comprise a stator with poly-phase windings forming a plurality of poles in a manner resembling the stator of an induction motor. The rotor assembly of the synchronous reluctance machine does normally not include electrical windings but has a number of poles in form of magnetically permeable segments. The rotor assembly is formed as an anisotropic structure where each pole of the reluctance machine has a direction of minimum reluctance, a so-called direct axis or d-axis, and a direction of maximum reluctance, a so-called quadrature axis or q-axis. When sinusoidal currents are applied to the poly-phase windings in the stator, an approximately sinusoidal magnetic flux waveform is produced in an air gap formed between the stator poles and an outer contour of the rotor assembly. The rotor will attempt to align its most magnetically permeable direction, the d-axis, to the direction of the peak flux by displacing its d-axis of minimum reluctance until alignment of the magnetic fields in the stator poles and rotor poles is obtained. The alignment process results in rotary motion of the rotor assembly at the same speed as the rotating stator magnetic field, i.e. at synchronous speed. The rotor rotary motion generates a torque which can be conveyed to the external of the reluctance machine for example by a rotor shaft bonded to the rotor assembly and extending through a central axis thereof.

The rotor assembly may comprise a stack of axially-oriented stator laminations or transversally-oriented stator laminations. In both cases, the stack of laminations comprises alternating layers of magnetically permeable and magnetically non-permeable and/or electrically insulating layers, such as varnish, to prevent generation of an axially-oriented flow of eddy-currents between neighbouring laminations that would lower the efficiency of the synchronous reluctance machine.

The rotor assembly must preferably exhibit high structural strength to allow rotation at high speeds and withstand elevated operation temperatures over extended periods of time. At the same time, the rotor assembly should exhibit low magnetic flux leakage to improve power efficiency and power factor of the synchronous reluctance machine. The rotor assembly should furthermore be designed for cost-effective and flexible manufacturing processes.

### Prior art

US 6,675,460 discloses a method of making composite powder metal disks for a rotor assembly of a synchronous reluctance machine. The powder metal disks are aligned axially along a central shaft and attached to the central shaft by mating key and keyways structures. A keyway is arranged on an interior surface of each powder metal disc and the keyway is pressed against the key structure on the central shaft to lock the metal disc and the central shaft to each other.
US 5,296,773 discloses a rotor assembly with a plurality of axially-extending stator laminations that are bonded to each other and to a star-shaped core by high temperature cure epoxy. Metallic end caps are secured to the axially-extending stator laminations to increase centrifugal strength of the rotor.
WO 2006/121225 discloses a rotor assembly of a synchronous reluctance motor. The rotor assembly includes a plurality of transversely oriented silicon steel sheets or laminations arranged in-between upper and lower ends plates. Each rotor lamination includes guide pin holes and rivet holes. A plurality of guide pins are inserted through the silicon steel laminations and guide pin fixing grooves formed on inwardly facing surfaces of the upper and lower end plates. The rivets extend through rivet holes in the silicon steel sheets and the upper and lower ends plates to couple the laminated core and the end plates to each other.

There is a continued need in the art to provide alternative and/or improved methods of bonding rotor laminations in rotor assemblies. Adhesive agents such as epoxy resins are often highly toxic and require extensive precautionary measures in the manufacturing process to protect workers and environment. These factors lead to increasing manufacturing time and costs. Furthermore, adhesively bonded rotor laminations may have difficulties in withstanding high temperature levels and mechanical stress for example imparted by centrifugal forces during high speed and/or high power operation. The fabrication and mounting of additional and complex mechanical structures such as cores, guide pins and rivets, end caps etc to bond rotor laminations together tend to increase manufacturing time and costs. In this perspective, one advantage of the present invention is the provision of a rotor assembly that comprises a plurality rotor discs bonded to each other by a plurality of press fitting elements to create a coherent rotor body even in the absence of rotor shafts, bolts, guide pins or similar support structures. Furthermore, since the attachment elements may comprise, or be completely formed in, rotor disc material, such as a material of one or more magnetically permeable segments of a rotor lamination or disc, costly and time-consuming support elements or structures can be avoided in the manufacturing process. This simplifies the manufacturing process of the rotor assembly and makes it considerably more flexible.

EP 1111755 discloses a rotor assembly wherein a plurality of rotor discs are attached to each other by adhesive.

WO 03/041889 discloses a stack of metallic laminations wherein the laminations are attached together with press-fitting elements.

### SUMMARY OF INVENTION

According to the invention, there is provided a rotor assembly for a synchronous reluctance machine according to claim 1.

The one or more magnetically permeable segments preferably comprise highly magnetically permeable material such as a ferromagnetic alloy or ferromagnetic metal for example silicon iron motor steel. The magnetically insulating barrier or barriers may comprise a variety of different materials which are magnetically non-permeable such as diamagnetic and paramagnetic materials. The magnetically insulating barriers are preferably formed as apertures or cut-outs in the rotor disc material which allows a pattern of the magnetically permeable segments and magnetically insulating barriers to be formed on each rotor disc by punching or stamping operations on a metallic carrier comprising the magnetically permeable material. According to an advantageous embodiment, each rotor disc is formed as a single unitary element fabricated by punching or stamping a metallic carrier. The metallic carrier may comprise a strip of ferromagnetic material or alloy with relative permeability, µᵣ, larger than 550, or preferably larger than 2000, or even more preferably larger than 5000, such as about 7000.

According to the invention, each rotor disc comprises a press-fitting element that is configured to mate to a corresponding press-fitting element arranged on one or more of the neighbouring rotor discs. The press-fitting element may comprise two mating shapes that are placed at aligned locations on opposing or facing plane surfaces of the rotor disc. This configuration of press-fitting element allows neighbouring rotor discs to be bonded to each other by application of pressure once the respective press-fitting elements of the neighbouring rotor discs have been appropriately oriented and aligned along a rotational axis of the rotor assembly. In this manner, it is possible to fabricate a coherent or self-supporting rotor assembly that can be manipulated without cores or support structures such as rotor shafts, guide pins, rivets, nuts and bolts, epoxy glue bolts, guide pins etc.

The press-fitting elements may comprise the material of the one or more magnetically permeable segments of the rotor disc. The press-fitting element may comprise a deformation of a magnetically permeable surface portion of the rotor disc such as a combination of a protrusion and an oppositely-located indentation for example created by a punch mark. The use of a deformation is particularly advantageous in embodiments of the invention where there exist some magnetically permeable portions of the rotor disc that conduct magnetic flux in an unwanted direction such as along the q-axis. The deformation is arranged to increase magnetic reluctance of the rotor disc along the q-axis thereof. The conduction of magnetic flux in an unwanted direction may take place where the rotor disc comprises one or more radial bridge segments as described below. According to one embodiment of the invention, the magnetic properties of the rotor disc have been improved along its d-axis by punching the one or several radial bridge segments of the rotor disc. Punch marks formed by the punching process create localized mechanical stress in deformed areas of the radial bridge segment or segments in question to deteriorate their magnetically conductive properties, i.e. increasing the reluctance of the radial bridge segment or segments.

In one embodiment of the invention, each rotor disc comprises first and second magnetically permeable segments separated by an intermittently arranged magnetically insulating barrier. One or more bridge segments comprising magnetically permeable material extends radially across the intermittent magnetically insulating barrier interconnecting the first and second magnetically permeable segments. A magnetically conductive path formed by the radial bridge segment is detrimental to the magnetic properties of the rotor disc because it/they tend to conduct magnetic flux along a quadrate axis (q-axis) of the rotor disc. On the other hand, the presence of the one or more radial bridge segments increases the mechanical strength of the rotor disc structure. Each rotor disc may in addition, or instead, comprise one or more circumferentially extending bridge segments interconnecting the first and second magnetically permeable segments of the rotor disc. These circumferentially extending bridge segments may be located in proximity of the circumferential edge of the rotor disc to mechanically support and strengthen the rotor disc. The one or more radial bridge segments and/or circumferentially extending bridge segments are preferably formed in rotor disc material by the previously mentioned punching or stamping process.

According to an aspect of the invention, there is provided a rotor assembly for a synchronous reluctance machine where the rotor assembly comprises a plurality of radially aligned rotor discs and each rotor disc comprising a circumferential edge and a central opening shaped for mating to a rotor shaft. Each of the rotor discs comprises one or more magnetically permeable segments and adjacently positioned magnetically insulating barriers. The rotor assembly comprises a plurality of attachment elements which bonds the plurality of radially aligned rotor discs to each other. The plurality of attachment elements comprises press-fitting elements formed on each rotor disc for example as a deformation of a magnetically permeable surface portion of the rotor disc. The deformation may comprise a combination of a protrusion and an oppositely-located indentation created by a punch mark.

### BRIEF DESCRIPTION OF THE DRAWINGS

A preferred embodiment of the invention will be described in more detail in connection with the append drawings in which:
Fig. 1 is an end surface view of a coherent rotor assembly not being part of the invention,
Fig. 2 is a 3D perspective view of the coherent rotor assembly depicted in Fig. 1,
Fig. 3 is an end surface view of a coherent rotor assembly not being part of the invention,
Fig. 4 is a 3D perspective view of the coherent rotor assembly depicted in Fig. 3,
Fig. 5 is an end surface view of a coherent rotor assembly in accordance with the invention,
Fig. 6 is a 3D perspective view of the coherent rotor assembly depicted in Fig. 5, and
Fig. 7 illustrates steps in a manufacturing process of the coherent rotor assembly depicted in Fig. 6.

### DESCRIPTION OF PREFERRED EMBODIMENT

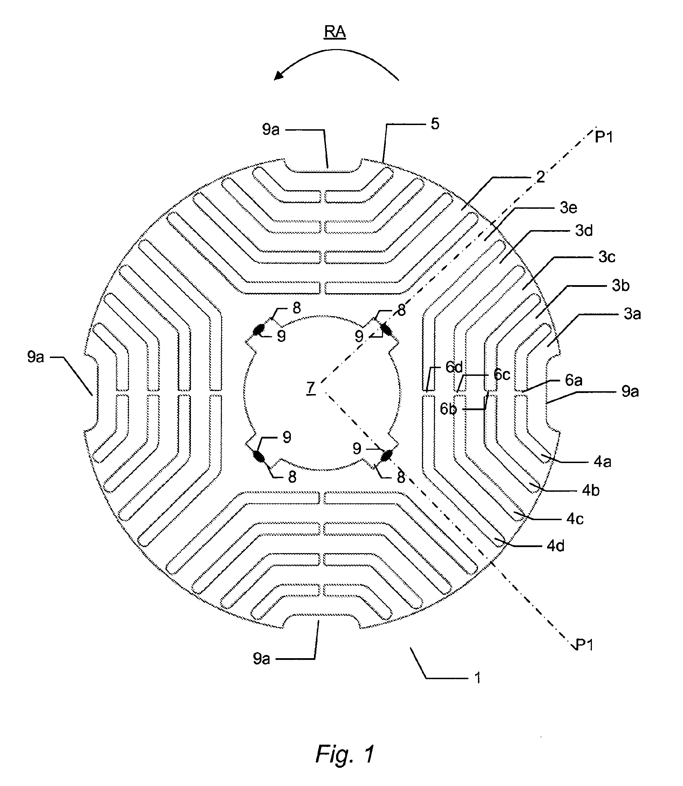

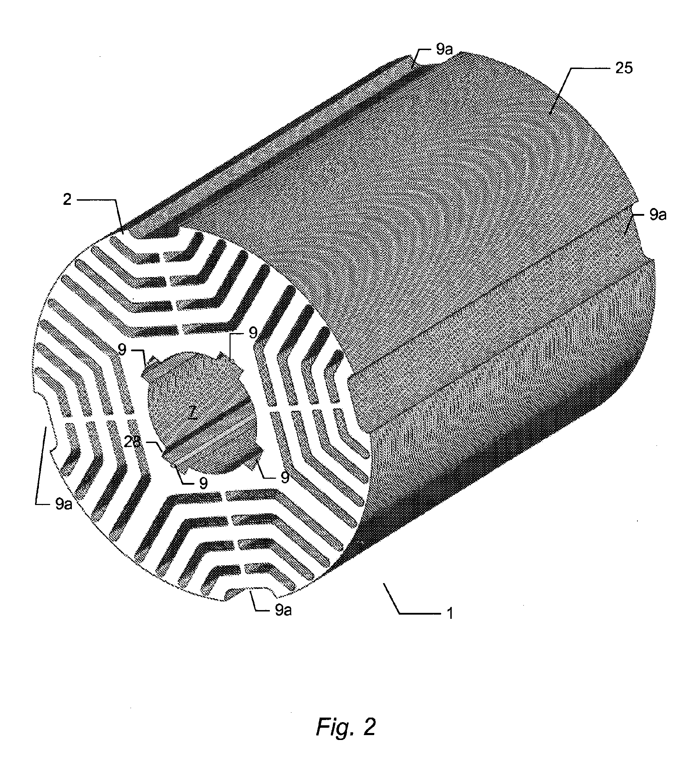

Fig. 1 shows a rotor disc 2 of a coherent rotor assembly 1. The coherent rotor assembly 1 comprises a plurality of rotor discs similar to the rotor disc 2 that are stacked and attached to each other by a plurality of welding spots discs (refer to Fig. 2).

The rotor disc 2 comprises four welding spots 9 placed on respective edge portions of four keyway cut-outs 8. The rotor disc 2 comprises four substantially identical poles distributed evenly around a rotor disc surface. A first pole extends across a first quarter of the rotor disc 2 as indicated by dashed line "P1". The first pole P1 comprises five magnetically permeable segments 3a)-e) separated by four equally spaced and intermittently positioned magnetically insulating barriers 4a)-d). Each of the five magnetically permeable segments 3a)-e) has an arm shaped geometry with each arm extending between first and second predetermined angular sections or coordinates along a circumferential edge 5 of the rotor disc 2.

While the rotor disc 2 comprises a total of four poles in the present embodiment and therefore includes four substantially identical patterns of magnetically permeable segments and intermittent magnetically insulating barriers along a rotational axis, indicated by arrow RA, of the rotor disc 2 other embodiments may comprise a smaller or larger number of poles such as 2 poles or between 6 and 20 poles.

The rotor disc 2 comprises the circumferential edge 5 and a central opening 7 shaped for mating to a rotor shaft that extends through a central rotor assembly tunnel created by the stack of radially aligned similar rotor discs (refer to item 7 of Fig. 2). The generally circular central opening 7 comprise evenly distributed keyhole structures 8 in form of four rectangular cut-outs that mate to keyways formed in the rotor shaft (not shown). The rotor disc 2 additionally comprises four radially-extending shallow cut-outs 9a) in the circumferential edge portion 5 of the rotor disc 2.

The rotor disc 2 preferably comprises a highly magnetically permeable material for example ferromagnetic metals or alloys with a relative permeability, µᵣ, larger than 550, or even more preferably larger than 2000, such as larger than 5000. In one attractive embodiment the rotor disc material is provided in form of a metallic carrier of silicon iron motor steel. This material is relatively inexpensive and can be provided as carrier sheets or elongate strips of suitable dimensions for punching or stamping operations. Suitable rotor disc dimensions may be a diameter between 5 cm and 50 cm and a thickness between 0.3 mm and 0.6 mm, but each of these dimensions may of course be larger or smaller depending on performance and/or shape requirements for the rotor assembly 1 imposed by any particular synchronous reluctance machine.

In the embodiment of the invention, the entire rotor disc 2 is formed as a single unitary element fabricated in a rapid cost-effective manner by punching or stamping strips of silicon iron motor steel with relative permeability, µᵣ, about 7000 to form a plurality of substantially identical rotor discs with highly magnetically permeable segments.

The rotor disc 2 comprises first and second magnetically permeable segments 3a, 3b, respectively, that are separated by an intermittently arranged magnetically insulating barrier 4a). A magnetically permeable radially extending bridge segment 6a), or radial bridge segment, is interconnecting the first and second magnetically permeable segments 3a)-b), respectively. A magnetically conductive or permeable path formed by the radial bridge segment 6a) is detrimental to the d-axis magnetic properties of the pole p1 of rotor disc 2 because the radial bridge segment 6a) conducts magnetic flux along a q-axis of the pole P1. However, the radial bridge segment 6a (as well as the other radial bridge segments 6b)-d) of pole P1) provides mechanical strength to the entire rotor disc structure which is a highly advantageous effect.

Fig. 2 is a 3D perspective view of the coherent rotor assembly 1 depicted in Fig. 1 illustrating the construction of the coherent rotor assembly 1 as a stack of radially and rotationally aligned substantially identical individual rotor discs. The coherent rotor assembly 1 has a substantially cylindrically outer contour with a cylindrical surface area 25 formed by the plurality of circumferential edges 5 (refer to Fig. 1) of abutted individual rotor discs. The number of individual rotor discs may vary depending on the application, but in the embodiment of the invention, the number of individual rotor discs is preferably between 100 and 200. The plurality rotor discs are brought into mutual abutment in a manner where neighbouring rotor discs are separated only by an intermittent thin electrically insulating layer, preferably applied as varnish. The thin electrically insulating layer between neighbouring rotor discs prevent generation of an axially-oriented flow of eddy-currents between the neighbouring discs or laminations.

The coherent rotor assembly 1 is preferably manufactured by punching or stamping a strip of silicon iron motor steel with an appropriately patterned tool to produce a plurality of individual rotor discs as unitary elements. Each rotor disc is stamped to produce a circumferential edge and a central opening for mating to a rotor shaft and one or more magnetically permeable segments with adjacently positioned magnetically insulating barriers in the shape of apertures. The plurality of individual of rotor discs are subsequently radially and axially aligned and stacked by a suitable alignment tool or fixture that may project through the central tunnel 7 and mate to one or more of the keyhole structures 9. A predetermined compressive force is thereafter applied to end portions of the plurality of stacked rotor discs to bring the rotor discs into mutual abutment. The plurality of rotor discs are finally bonded to each other by axially extending rows of welding spots 9 fused to respective edge portions of the rotor discs. In the illustrated embodiment, a single row of welding spots 9 is arranged inside each keyhole structure 8, but fewer or more rows of welding spots may of course be utilized. The axially extending rows of welding spots 9 may be formed by inserting an automated welding probe through the central rotor assembly tunnel 7. Process time for the welding operation can be minimized if edge portions of several rotor discs are welded in parallel.

A preferred welding technique is Tungsten Inert Gas (TIG). The TIG technique is a robust welding method which possesses several advantages:
- Applies substantially zero pressure load to the cylindrical surface area 25 which is important because individual rotor discs may be displaced or bend by excessive force.
- Welding can be performed at relative high speed which gives low manufacturing time.
- It is relatively simple to automate in a production line during large scale manufacturing.
- A welded rotor assembly has a mechanically stable and rigid structure which makes the welded rotor assembly simple and versatile to handle during subsequent manufacturing steps for example mounting on the rotor shaft.

After completion of the welding process, the coherent rotor assembly 1 is removed from the fixture and the quality of the welding is checked manually or by suitable automated inspection equipment.

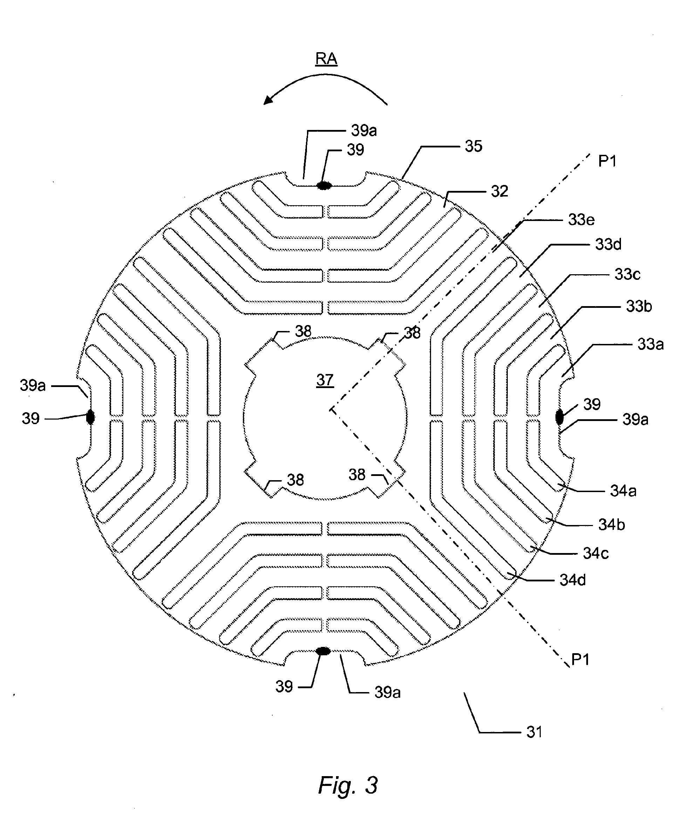

Fig. 3 shows a rotor disc 32 which forms part of a coherent rotor assembly 31. The rotor disc 32 is generally similar to the rotor disc 2 of the first embodiment and similar features have been provided with similar reference numerals. However, instead of having welding spots arranged in keyways structures 38 the present rotor disc 32 has four welding spots 39 placed on respective edge coordinates along an outer circumferential edge portion 35 of the rotor disc 32. The welding spots 39 are located inside four radially-extending shallow cut-outs 39a) in the circumferential edge portion 35 of the rotor disc 32 to accommodate the welding spots 39 and prevent these from extending into or across a magnetic air gap formed between the outer cylindrical contour of the coherent rotor assembly 31 and an inner surface of the stator structure (not shown) in an assembled synchronous reluctance machine.

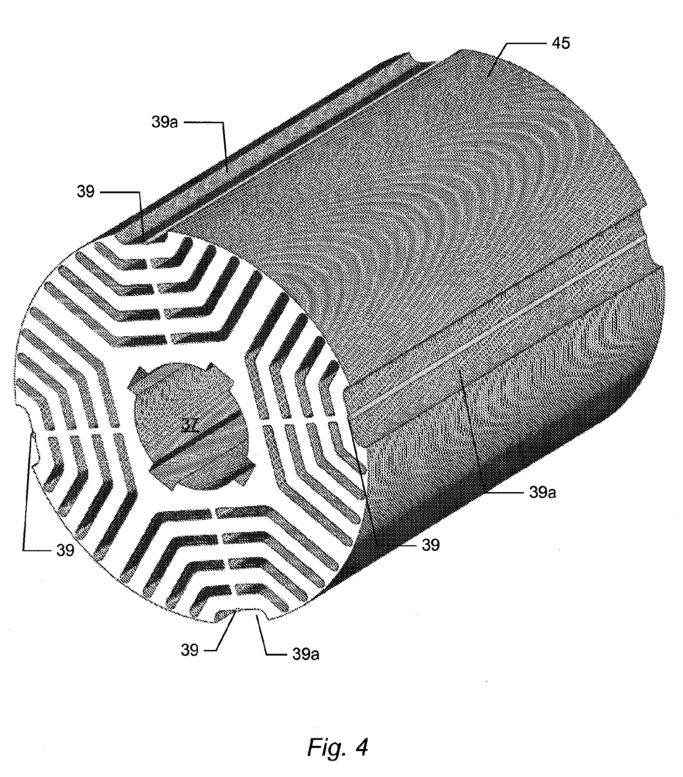

Fig. 4 is a 3D perspective view of the coherent rotor assembly 31 depicted in Fig. 3 illustrating the construction of the coherent rotor assembly 31 as a stack of radially and rotationally aligned substantially identical individual rotor discs or plurality of rotor discs. As previously-mentioned the plurality of rotor discs are bonded to each other by axially extending rows of welding spots 39 fused to respective edge portions of the plurality of rotor discs inside the radially-extending shallow channel 39a) formed in the circumferential surface 45 of the rotor assembly 31.

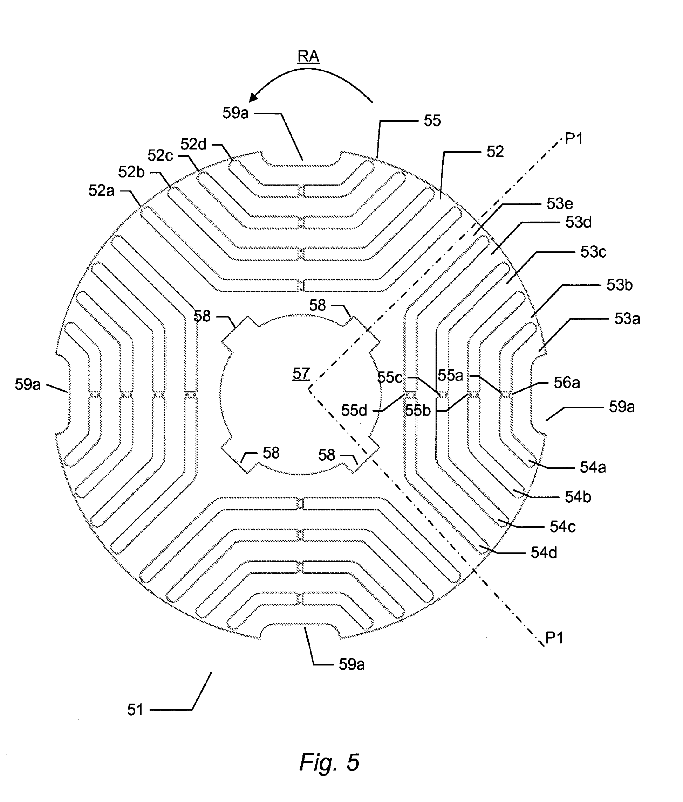

Fig. 5 shows a rotor disc 52 which forms part of a coherent rotor assembly 51 according to the present invention. The rotor disc 52 is generally similar to the rotor disc 2 of the first embodiment and similar features have been provided with similar reference numerals. However, the present embodiment uses attachment elements formed as press-fitting elements 55a)-d) instead of welding spots to bond a plurality of rotor discs to each other. In the embodiment of the invention, press-fitting elements 55a)-d) additionally serve to enhance d-axis magnetic properties of the rotor disc 52 by increasing a magnetic reluctance of the rotor disc along its q-axis as will be described in more detail below. However, in other embodiments not being part of the invention, the press-fitting elements 55a)-d) may be arranged on surface portions of the rotor disc 52 where they have a small or no effect on the magnetic reluctance of the rotor disc 52 along its q-axis and primarily serve as attachment element bonding neighbouring rotor discs to each other.

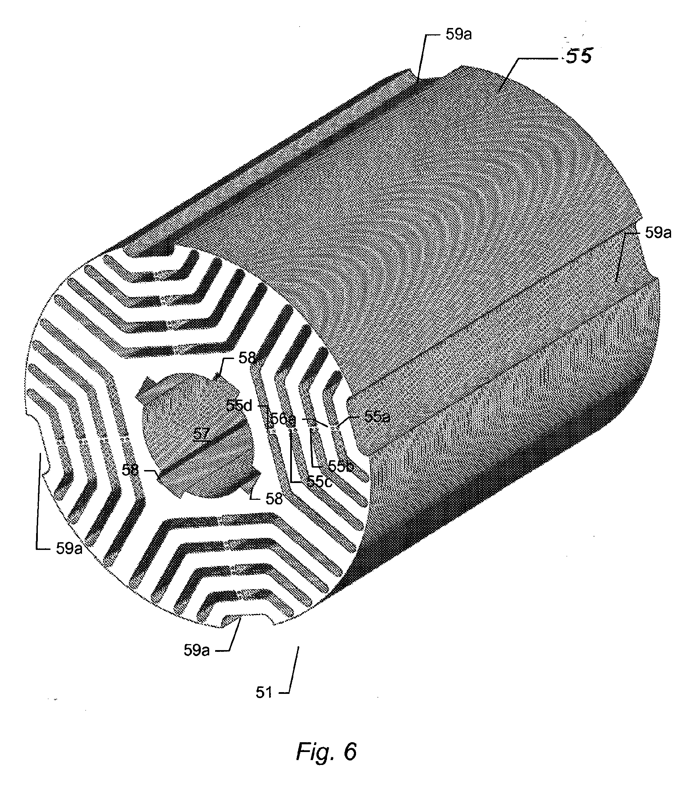

In the present embodiment, the press-fitting elements 55a)-d) are formed as a plurality of pairs of punch marks arranged on magnetically permeable segments of each rotor disc. The four pairs of punch marks 55a)-d) on pole P1, together with corresponding punch marks on the three other poles of the rotor disc 52 as illustrated, are brought into frictional engagement with a neighbouring rotor disc of the coherent rotor assembly 51. The coherent rotor assembly 51 comprises a stack of radially and axially aligned similar rotor discs (refer to item 51 of Fig. 6). Each of the punch marks 55a)-d) on the rotor disc surface comprises an upwardly projecting protrusion on a first surface of the rotor disc 52 and an oppositely-located indentation on an opposing surface of the rotor disc 52 allowing aligned pairs of protrusions and indentations on neighbouring rotor discs to be forced into frictional engagement and bond these to each other by press-fitting. This press-fitting attachment technique of neighbouring rotor discs of the coherent rotor assembly 51 accordingly relies on attachment elements that are formed entirely in rotor disc material.

To eliminate, or at least lessen, the detrimental effect caused by a q-axis magnetically conductive or permeable path formed by the radial bridge segment 56a) and other radial bridge segments of the pole P1, a deformation in form of a pair of punch marks 55a) has been imparted on the radial bridge segment 56a), during manufacturing of the rotor disc 52. Three similar pairs of punch marks 55b)-d) have been imparted to the other radial bridge segments of pole P1 as illustrated. The diameter of each punch mark may lie between 0.5 mm and 2.0 mm depending on dimensions of the radial bridge segment in question. The four pairs of punch marks 55a)-d) create localized mechanical stress in each of the respective punched areas of the radial bridge segments so as to deteriorate their magnetic conductive properties. The pairs of punch marks are therefore operative to increase magnetic reluctance of the rotor disc in the q-axis of the pole P1 while retaining a highly desirable mechanical strengthening effect on the rotor disc structure provided by the radial bridge segments. Corresponding pairs of punch marks have been imparted to radial bridge segments of the other poles of the rotor disc 52 as indicated in the present figure. In other embodiments of the invention, one or more of circumferentially extending bridge segments 52a)-d) (indicated on pole number 3 instead of P1 for convenience) may additionally be punched to create localized deformations and further increase d-axis magnetic reluctance(s) of the pole P1.

The rotor disc 52 comprises four radially-extending shallow cut-outs 59a) in the circumferential edge portion 55 of the rotor disc 52 which may serve to increase a saliency ratio and power factor of the rotor disc 52. While the illustrated shallow cut-outs 59a) are entirely optional in the embodiment of the invention they may be included for the purpose of holding welding spots similar to those illustrated in the second embodiment described in connection with Fig. 3.

Fig. 6 is a 3D perspective view of the coherent rotor assembly 51 depicted in Fig. 5 in an assembled state and illustrating a construction of the coherent rotor assembly 51 as a stacked plurality of rotor discs that are radially and rotationally aligned. As previously-mentioned the plurality of rotor discs are bonded to each other by aligned pairs of press-fitting elements formed as mating protrusions and indentations on facing surfaces of neighbouring rotor discs. A rotor assembly tunnel 57 extends centrally through the coherent rotor assembly 51 and is shaped and dimensioned to mate to a rotor shaft (not shown). Four radially-extending shallow channels 69a, formed by the previously-mentioned shallow rotor disc cut-outs 59a) (refer to Fig. 5), are provided in the circumferential surface 55 of the rotor assembly 51.

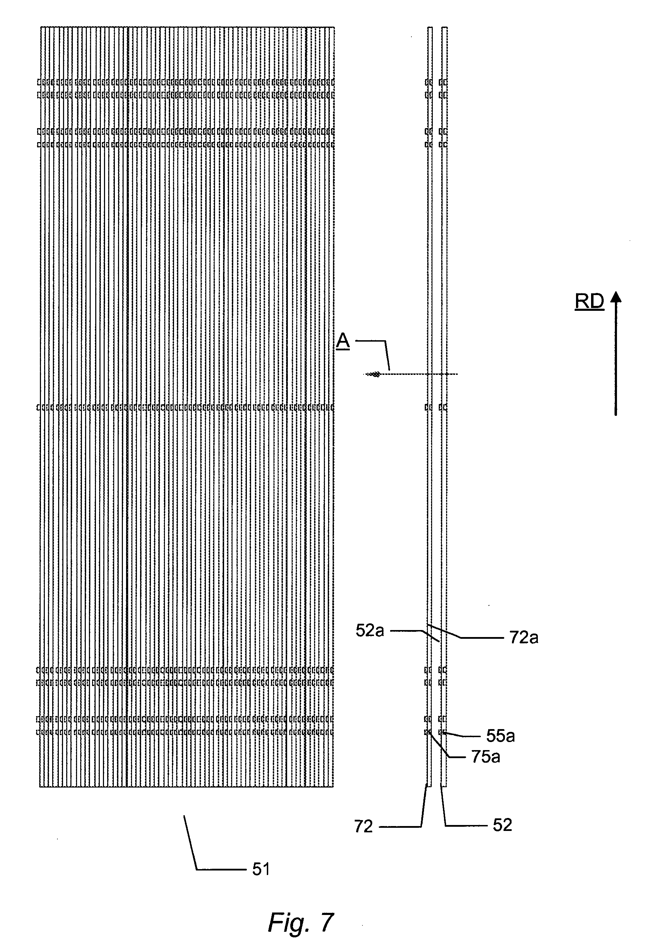

Fig. 7 illustrates a step of the manufacturing process of the rotor assembly depicted on Fig, 6. A pair of neighbouring rotor discs 52, 72 are aligned in radial direction (indicated by arrow "r") and also aligned along a rotational axis (indicated by arrow "A") extending through the rotor assembly tunnel 57 (refer to Fig. 6) so that the opposing protrusions and indentations of punch marks 55a)-d) on respective facing rotor disc surfaces 52a, 72a can be brought into contact. An appropriate pressure is thereafter applied to end discs of the rotor assembly 51 whereby the opposing pairs of protrusions and indentations are brought into frictional engagement and press-fitted together to form the coherent rotor assembly 51 of mutually bonded rotor discs. In other embodiments, each rotor disc comprises additional (to the above-described press-fitting elements formed by pairs of protrusions and indentations) attachment elements preferably in form of welding spot or spots arranged on an edge portion of the rotor disc. The inclusion of such optional welding spots may in some applications serve to further improve mechanical strength and cohesion of the coherent rotor assembly.

## Claims

1. A rotor assembly (51) for a synchronous reluctance machine comprising:
- a plurality of radially aligned rotor discs (52), each rotor disc (52) comprising a circumferential edge (55) and a central opening (57) shaped for mating to a rotor shaft,
- each rotor disc (52) comprising one or more magnetically permeable segments (53a)-e)) and adjacently positioned magnetically insulating barriers (54a)-e)),
- a plurality of attachment elements bonding the plurality of radially aligned rotor discs to each other, **characterized in that** the attachment elements comprise at least one press-fitting element (55a)-d)) arranged on a plane surface of each rotor disc (52) and comprising a deformation of a magnetically permeable portion of the rotor disc (52), wherein
the deformation on each rotor disc is arranged to increase magnetic reluctance of the rotor disc (52) in a quadrature axis of the rotor disc.

2. A rotor assembly according to claim 1, wherein each rotor disc (52) comprises:
- first and second magnetically permeable segments separated by an intermittently arranged magnetically insulating barrier; and
- magnetically permeable radially and/or circumferentially extending bridge segments (56a) interconnecting the first and second magnetically permeable segments.

3. A rotor assembly according to claim 1 or 2, wherein the plurality of attachment elements comprises rotor disc material such as a material of the one or more magnetically permeable segments.

4. A rotor assembly according to claim 1, wherein the deformation comprises a protrusion and an oppositely-located indentation such as a punch mark (55a)-d)).

5. A rotor assembly according to any of the preceding claims, wherein each rotor disc (52) is formed as a single unitary element fabricated by punching or stamping a metallic carrier.

## Patentansprüche

1. Rotoranordnung (51) oder synchrone Reluktanzmaschine, umfassend:
- mehrere radial ausgerichtete Rotorscheiben (52), wobei jede Rotorscheibe (52) einen Umfangsrand (55) und eine zentrale Öffnung (57) umfasst, die zum Angrenzen an eine Rotorwelle ausgebildet ist,
- wobei jede Rotorscheibe (52) eines oder mehrere magnetisch durchlässige Segmente (53a bis e) umfasst, die benachbart zu einer magnetisch isolierenden Barriere (54a bis e) angeordnet sind
- mehrere Befestigungselemente, welche die mehreren radial ausgerichteten Rotorscheiben miteinander verbinden,
**dadurch gekennzeichnet, dass**
die Befestigungselemente mindestens ein Druckpasselement (55a bis d) umfassen, das auf einer flachen Oberfläche jeder Rotorscheibe (52) angeordnet ist und eine Verformung des magnetisch durchlässigen Abschnitts der Rotorscheibe (52) umfassen,
wobei die Verformung jeder Rotorscheibe ausgelegt ist, um die magnetische Reluktanz der Rotorscheibe (52) auf einer Quadraturachse der Rotorscheibe zu erhöhen.

2. Rotoranordnung nach Anspruch 1, wobei jede Rotorscheibe (52) Folgendes umfasst:
- erste und zweite magnetisch durchlässige Segmente, die von einer unterbrochen angeordneten magnetischen Isoliergrenze getrennt sind; und
- eine magnetisch durchlässige, sich radial und/oder über den Umfang erstreckende Brückensegmente (56a), welche die ersten und zweiten magnetisch durchlässigen Segmente miteinander verbinden.

3. Rotoranordnung nach Anspruch 1 oder 2, wobei die mehreren Befestigungselemente ein Rotorscheibenmaterial umfassen, wie ein Material des einen oder der mehreren magnetisch durchlässigen Segmente.

4. Rotoranordnung nach Anspruch 1, wobei die Verformung einen Vorsprung und eine gegenüberliegende Einkerbung wie eine Stanzenmarkierung (55a bis d) umfasst.

5. Rotoranordnung nach einem der vorherigen Ansprüche, wobei jede Rotorscheibe (52) als einzelnes Element ausgebildet ist, das durch Stanzen oder Stempeln eines Metallträgers gebildet wird.

## Revendications

1. Ensemble de rotor (51) pour une machine à réluctance synchrone, comprenant :
- une pluralité de disques de rotor (52) alignés dans le plan radial, chaque disque de rotor (52) comprenant un bord circonférentiel (55) et une ouverture centrale (57) formée pour s'accoupler avec un arbre de rotor ;
- chaque disque de rotor (52) comprenant un ou plusieurs segments magnétiquement perméables (53a)-e)) et des barrières magnétiquement isolantes (54a)-e)) positionnées à côté ;
- une pluralité d'éléments de fixation reliant entre eux la pluralité de disques de rotor alignés dans le plan radial ;
**caractérisé en ce que** les éléments de fixation comprennent au moins un élément à ajustement-pression (55a)-d)) agencé sur une surface plane de chaque disque de rotor (52) et comprenant une déformation d'une partie magnétiquement perméable du disque de rotor (52) ;
dans lequel la déformation s'exerçant sur chaque disque de rotor est agencée pour augmenter la réluctance magnétique du disque de rotor (52) dans un axe en quadrature du disque de rotor.

2. Ensemble de rotor selon la revendication 1, dans lequel chaque disque de rotor (52) comprend :
- des premier et second segments magnétiquement perméables séparés par une barrière magnétiquement isolante agencée de façon intermittente ; et
- des segments de pont (56a) magnétiquement perméables s'étendant dans le plan radial et/ou dans le plan circonférentiel interconnectant les premier et second segments magnétiquement perméables.

3. Ensemble de rotor selon la revendication 1 ou 2, dans lequel la pluralité d'éléments de fixation comprend un matériau de disque de rotor similaire au matériau du ou des segments magnétiquement perméables.

4. Ensemble de rotor selon la revendication 1, dans lequel la déformation comprend une saillie et une indentation positionnée à l'opposée prenant par exemple la forme d'un poinçon (55a)-d)).

5. Ensemble de rotor selon l'une quelconque des revendications précédentes, dans lequel chaque disque de rotor (52) prend la forme d'un élément unitaire unique fabriqué par poinçonnage ou estampage d'un support métallique.
